# EUROPÄISCHE PATENTSCHRIFT

(11) **EP 1 436 881 B1**
(45) Veröffentlichungstag und Bekanntmachung des Hinweises auf die Patenterteilung: **01.10.2014**
(21) Anmeldenummer: 02754281.0
(22) Anmeldetag: 28.06.2002
(51) Int. Cl.: H02K 11/02

(54) **VORRICHTUNG MIT EINEM ENTSTÖRGLIED ZUR REDUZIERUNG EINER STÖRLEISTUNG**
DEVICE WITH A SUPPRESSOR FOR REDUCING INTERFERENCE
DISPOSITIF COMPORTANT UN ELEMENT D'ANTIPARASITAGE DESTINE A LA REDUCTION DES INTERFERENCES

(30) Priorität: 11.10.2001 DE 10150237
(43) Veröffentlichungstag der Anmeldung: 14.07.2004
(73) Patentinhaber: ROBERT BOSCH GMBH, 70442 Stuttgart (DE)
(72) Erfinder: KRAENZLER, Ernst, 70771 Leinfelden-Echterdingen (DE); SAUR, Dietmar, 72810 Gomaringen (DE); SCHMID, Hardy, 70563 Stuttgart (DE); KAGELER, Sven, 70771 Leinfelden-Echterdingen (DE)
(86) Internationale Anmeldenummer: PCT/DE2002/002361
(87) Internationale Veröffentlichungsnummer: WO 2003/036779

(56) Entgegenhaltungen:
- EP-A- 1 120 885
- DE-A- 19 856 390
- US-A- 5 231 321
- US-A- 5 734 212
- US-A- 6 104 110
- US-B1- 6 307 344

## Beschreibung

### Stand der Technik

Die Erfindung geht aus von einer Vorrichtung mit einem Entstörglied zur Reduzierung einer Störleistung nach dem Oberbegriff des Anspruchs 1.

Um bei Elektromotoren in einem im hochfrequenten Bereich die Störleistung zu senken, ist bekannt, zwei Entstörglieder in eine Zuleitung des Elektromotors elektrisch zwischen einen Polschuh und einen Kommutator des Elektromotors zu schalten. Die Entstörglieder werden dabei in Köchern in einem Motorgehäuse getrennt voneinander befestigt und besitzen unterschiedlich lange Anschlußkabel. Die Entstörglieder besitzen jeweils eine Spule und einen Kern.

Aus der Druckschrift EP 1 120 885 A2 ist bereits eine elektrische Störsignaldämpfungseinheit, die mit einem Elektromotor und mit einer externen Stromversorgung verbindbar ausgebildet ist, bekannt.

Ferner offenbart die Druckschrift US 6,104,110 A einen elektrischen Störsignaldämpfer, der mit einem Anschlusskabel einer Bürste eines DC-Motors und mit einer elektrischen Anschlussklemme verbindbar ausgebildet ist.

Die Druckschrift DE 198 56 390 A1 lehrt zudem eine Entstörungsschaltung, die zwischen einem Eingangsanschluss 18 und einem Ausgangsanschluss 16 eines Elektromotors einer Treibstoffpumpe angeordnet ist.

### Vorteile der Erfindung

Die Erfindung geht aus von einer Vorrichtung mit zumindest einem Entstörglied zur Reduzierung einer Störleistung, insbesondere im hochfrequenten Bereich einer elektrischen Maschine, und mit zumindest einem Anschlußelement zum Anschluß an einen Polschuh der elektrischen Maschine, das ein Steckelement (24, 26) zum Anschluß an den Polschuh und ein Steckelement (36, 38) zum Anschluß an einen Anker, das an das Anschlußelement (14, 16) angeformt ist, aufweist.

Es wird vorgeschlagen, daß das Entstörglied in einem Aufnahmebereich des Anschlußelements, das das Steckelement zum Anschluß an den Polschuh aufweist, befestigt und mit diesem zu einem Modul zusammengefaßt und bezüglich eines Stromverlaufs zwischen einem Anker und dem Polschuh der elektrischen Maschine (18) angeordnet ist. Verkabelungen und Befestigungsbauteile können eingespart und es kann ein kompaktes und platzsparend integrierbares Modul erreicht werden, das besonders vorteilhaft in Handwerkzeugmaschinen integriert werden kann, und zwar insbesondere auch in Handwerkzeugmaschinen, die einen Elektromotor mit einer drehbaren Bürstenplatte aufweisen, die für sich in der Regel einen größeren Bauraum erfordert als eine feste Bürstenplatte. Das Modul kann vorteilhaft nahe an einem Kommutator der elektrischen Maschine und damit an der Störquelle angeordnet und es kann ein hoher Wirkungsgrad des Entstörglieds erreicht werden.

Mit dem Modul kann eine einfache und schnelle Montage und Demontage erreicht werden, insbesondere auch von anderen Bauteilen und Baugruppen, wie beispielsweise von Kohlen der elektrischen Maschine, und es kann konstruktiv einfach eine hohe elektrische Sicherheit erzielt werden, indem stromführende Leitungen vorteilhaft nach außen geschützt, mit einem relativ großen Abstand zu einem Außengehäuse angeordnet werden können.

Der Montageaufwand und der erforderliche Bauraum kann weiter reduziert werden, indem das Anschlußelement alternativ oder zusätzlich zu dem Steckelement zum Anschluß an einen Anker, ein in das Modul integriertes Steckelement zum Anschluß an einen Betätigungsschalter aufweist. Dadurch, daß das Steckelement zum Anschluß an den Anker der elektrischen Maschine am Anschlußelement befestigt oder vorteilhaft angeformt ist, kann ein Montageaufwand vermieden werden kann.

Die Steckelemente können dabei von verschiedenen, dem Fachmann als sinnvoll erscheinenden Elementen gebildet sein, wie beispielsweise von Flachsteckern oder von Steckhülsen usw.

Besitzt die Vorrichtung zwei baugleiche Module, kann eine Fehlmontage durch Vertauschen der Module vorteilhaft vermieden und es kann die Anzahl verschiedenartiger Bauteile und damit der Kostenaufwand reduziert werden.

Ferner wird vorgeschlagen, daß zwei Module auf einer Trägereinheit zu einer einsetzbaren Einheit zusammengefaßt sind, wodurch diese vorteilhaft in einem Montageschritt und mit wenigen Befestigungselementen in einem Gehäuse befestigt werden können.

Das oder die Module können auf einer von einem zusätzlichen Bauteil gebildeten Trägereinheit oder vorteilhaft auf einem der elektrischen Maschine zugehörigen Bauteil befestigt sein, wie auf einer Bürstenplatte der elektrischen Maschine oder vorteilhaft auf einer Anschlußplatte der elektrischen Maschine, wodurch zusätzliche Bauteile vermieden werden können.

In einer weiteren Ausgestaltung wird vorgeschlagen, daß das Modul zumindest teilweise mit Kunststoff umspritzt ist. Mit einer Umspritzung kann insbesondere ein vorteilhafter Vibrationsschutz erreicht werden. Ferner kann einfach eine sichere Zuordnung der Bauteile innerhalb des Moduls zueinander mit wenigen Befestigungselementen gewährleistet werden. Das Modul kann dabei teilweise in die Anschlußplatte eingelegt und anschließend umspritzt oder kann vorteilhaft zumindest teilweise von der Anschlußplatte umspritzt werden, wodurch wiederum der Montageaufwand reduziert werden kann.

Die Vorrichtung kann bei verschiedenen, dem Fachmann als geeignet erscheinenden elektrischen Maschinen eingesetzt werden, wie beispielsweise bei im hochfrequenten Bereich betriebenen Generatoren usw., jedoch aufgrund der erreichbaren kompakten Konstruktion besonders vorteilhaft bei Handwerkzeugmaschinen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematisch dargestellte Schlagbohrmaschine in einer Seitenansicht,
- Fig. 2: ein Modul mit einem Entstörglied und einem Anschlußelement,
- Fig. 3: das Modul aus Fig. 2, montiert auf einer Anschlußplatte eines Elektromotors,
- Fig. 4: eine zu Fig. 2 alternatives Modul mit einem integrierten Steckelement zu einem Betätigungsschalter und
- Fig. 5: das Modul aus Fig. 4, montiert auf einer Anschlußplatte.

### Beschreibung der Ausführungsbeispiele

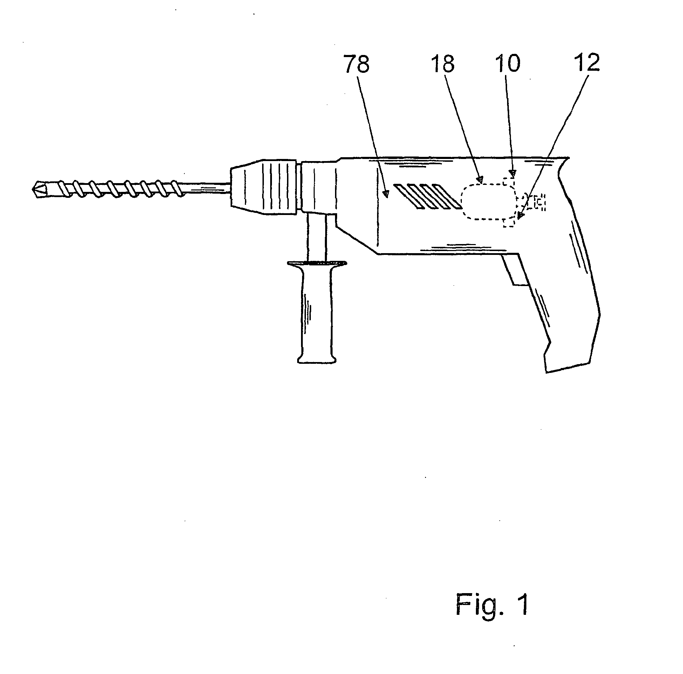

Fig. 1 zeigt eine schematisch dargestellte Schlagbohrmaschine in einer Seitenansicht mit einem in einem Gehäuse 78 angeordneten Elektromotor 18, der eine drehbare, nicht näher dargestellte Bürstenplatte aufweist. Die Schlagbohrmaschine besitzt eine Vorrichtung mit zwei Entstörgliedern 10, 12 zur Reduzierung einer Störleistung im hochfrequenten Bereich und mit jeweils einem Anschlußelement 14, 16 zum Anschluß an einen Polschuh des Elektromotors 18 (Fig. 1, 2 und 3).

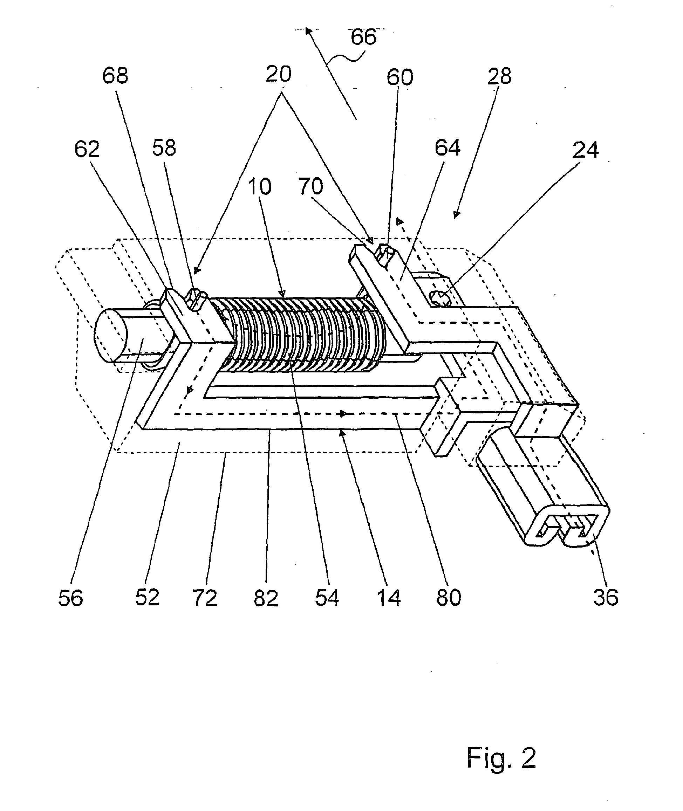

Das Entstörglied 10, 12 ist erfindungsgemäß in einen Aufnahmebereich 20, 22 des Anschlußelements 14, 16, das ein Steckelement 24, 26 zum Anschluß an den Polschuh aufweist, befestigt und ist mit diesem zu einem Modul 28, 30 zusammengefaßt. Die Module 28, 30 sind baugleich ausgeführt, wobei nachfolgend der Aufbau der Module 28, 30 am Modul 28 erläutert ist (Fig. 2).

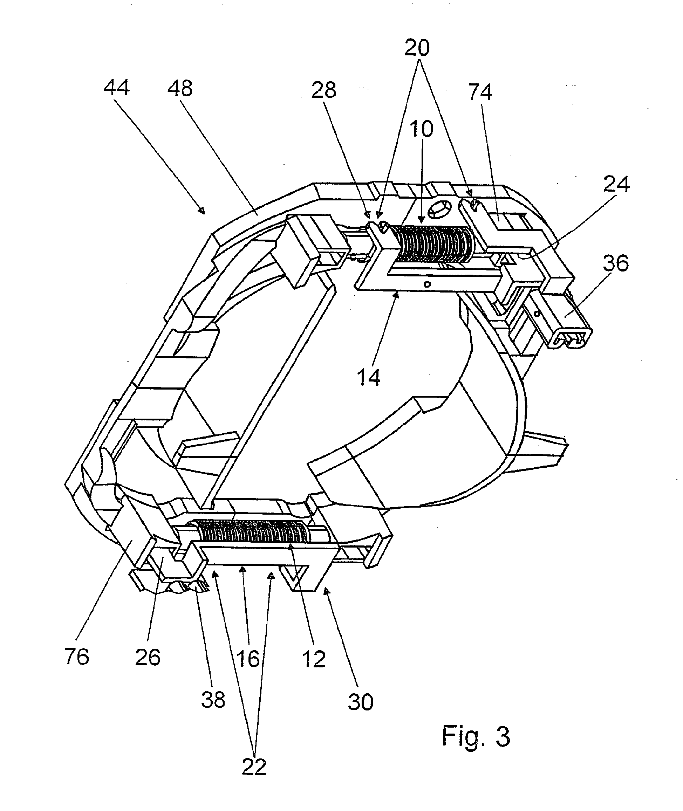

Das Entstörglied 10, das von einer Spule 54 und einem von der Spule 54 umschlossenen Ferritkern 56 gebildet ist, wird bei der Montage des Moduls 28 in den Aufnahmebereich 20 des Anschlußelements 14 eingelegt. Der Aufnahmebereich 20 wird von zwei an das Anschlußelement 14 angeformte Haltearme 62, 64 gebildet, die mit ihren freien Enden in Einsteckrichtung 66 des Moduls 28 in eine Anschlußplatte 48 des Elektromotors 18 weisen (vgl. Fig. 2 und 3). Das Entstörglied 10 wird mit Enden 58, 60 der Spule 54 in Einkerbungen 68, 70, die in die freien Enden der Haltearme 62, 64 eingebracht sind, eingeführt. Anschließend werden die Haltearme 62, 64 im Bereich der Einkerbungen 68, 70 verkrimpt und verlötet, um das Entstörglied 10 im Anschlußelement 14 zu fixieren und mit diesem elektrisch zu verbinden.

Ist das Entstörglied 10 im Aufnahmebereich 20 des Anschlußelements 14 fixiert und mit dem Anschlußelement 14 zum Modul 28 zusammengefügt, werden diese in ein in Fig. 2 angedeutetes Gehäuse 72 eingeschoben, das anschließend mit Kunststoff 52 ausgegossen wird. Das Modul 28 bzw. das Entstörglied 10 und das Anschlußelement 14 sind dadurch vorteilhaft vor Vibrationen geschützt.

Das Modul 28 und das baugleiche Modul 30 werden mit ihren als Flachsteckern ausgebildeten Steckelementen 24, 26 in an die Anschlußplatte 48 des Elektromotors 18 angeformte Einsteckhülsen 74, 76 eingesteckt (Fig. 3). Die Module 28, 30 sind zur Übersichtlichkeit in Fig. 3 ohne Gehäuse 72 und ohne Kunststoffumspritzung dargestellt. Die zwei Module 28, 30 bilden mit der Anschlußplatte 48, die einen Teil des Stators bildet, eine Einheit 44, die anschließend in einem Montageschritt in das Gehäuse 78 der Schlagbohrmaschine eingepreßt werden kann.

Auf der jeweils dem Steckelement 24, 26 abgewandten Seite der Anschlußelemente 14, 16 ist jeweils ein als Einsteckhülse ausgebildetes Steckelement 36, 38 angeformt, in das ein nicht näher dargestelltes, als Flachstecker ausgebildetes Steckelement vom Anker des Elektromotors 18 eingesteckt werden kann. In Fig. 2 ist schematisch ein Stromverlauf 80 vom Anker durch das Modul 28 zum Polschuh dargestellt. Der Strom fließt vom Steckelement 36 über den Haltearm 64 zum Ende 60 der Spule 54, durch die Spule 54 zum Haltearm 62 und durch den Haltearm 62, der sich mit einem Schenkel 82 parallel zum Ferritkern 56 des Entstörglieds 10 erstreckt, zum Steckelement 24. Wechselt die Stromrichtung, fließt der Strom entsprechend in die entgegengesetzte Richtung durch das Modul 28.

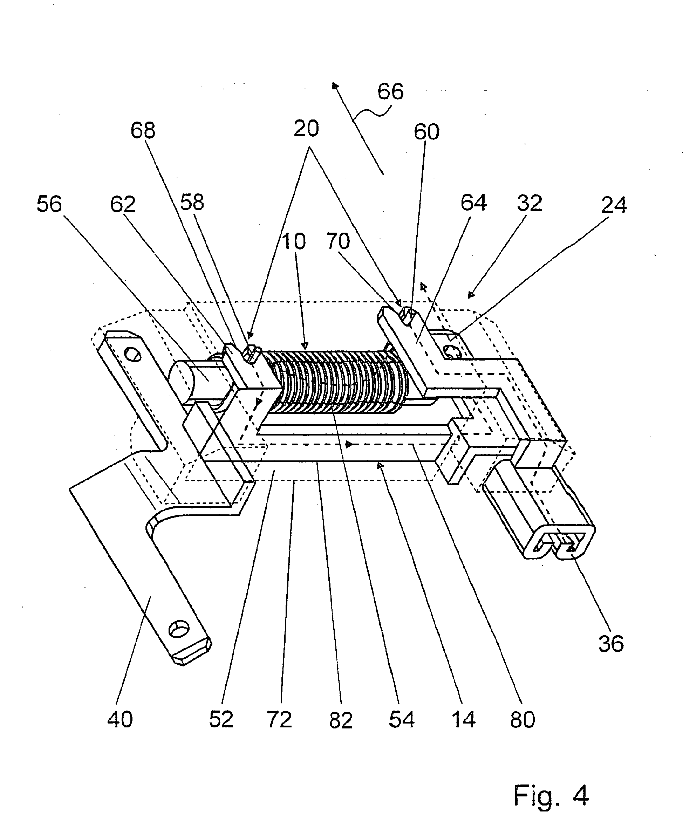

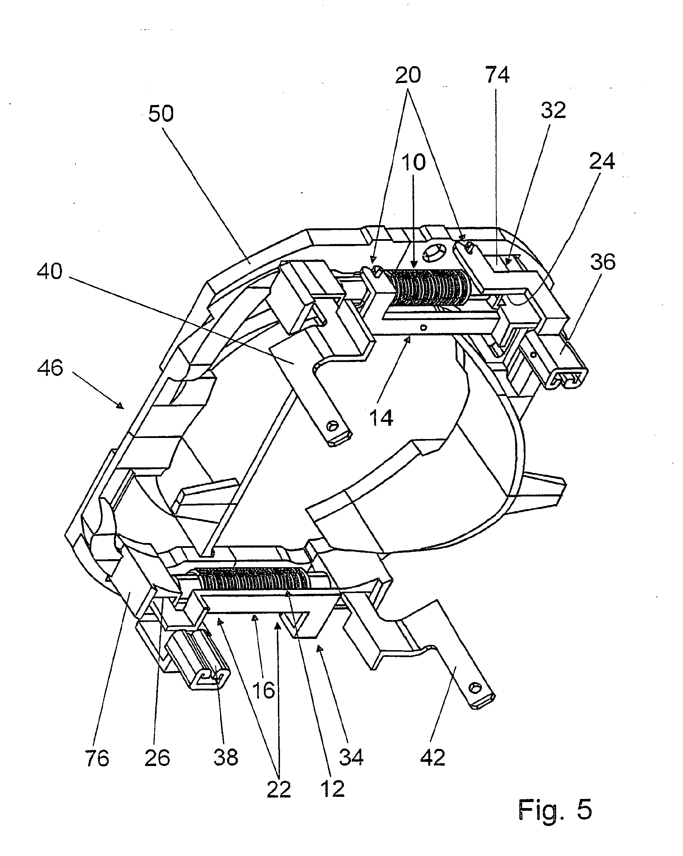

In den Fig. 4 und 5 ist eine alternative Vorrichtung dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in den Fig. 1 bis 3 verwiesen werden. Die nachfolgende Beschreibung beschränkt sich im wesentlichen auf die Unterschiede zum Ausführungsbeispiel in den Fig. 1 bis 3.

Die Vorrichtung besitzt zwei auf einer Anschlußplatte 50 eines Elektromotors eingesteckte, baugleiche Module 32, 34, die mit der Anschlußplatte 50, die einen Teil des Stators bildet, eine in ein Gehäuse einsetzbare Einheit 46 bilden. Die Module 32, 34 besitzen jeweils ein integriertes, als Winkelstecker ausgebildetes Steckelement 40, 42 zum Anschluß an einen Betätigungsschalter. Das Steckelement 40 wird in ein das Modul 32 umschließendes Gehäuse 72 eingelegt und beim Umspritzen des Moduls 32 bzw. eines Entstörglieds 10 und eines Anschlußelements 14 mit Kunststoff 52 mit umspritzt (Fig. 4). Über den Kunststoff 52 ist das Steck-element 40 gegenüber dem Entstörglied 10 und dem Anschlußelement 14 elektrisch isoliert.

**Bezugszeichen**

| | | | |
|---|---|---|---|
| 10 | Entstörglied | 56 | Ferritkern |
| 12 | Entstörglied | 58 | Ende |
| 14 | Anschlußelement | 60 | Ende |
| 16 | Anschlußelement | 62 | Haltearm |
| 18 | Elektromotor | 64 | Haltearm |
| 20 | Aufnahmebereich | 66 | Einsteckrichtung |
| 22 | Aufnahmebereich | 68 | Einkerbung |
| 24 | Steckelement | 70 | Einkerbung |
| 26 | Steckelement | 72 | Gehäuse |
| 28 | Modul | 74 | Einsteckhülse |
| 30 | Modul | 76 | Einsteckhülse |
| 32 | Modul | 78 | Gehäuse |
| 34 | Modul | 80 | Stromverlauf |
| 36 | Steckelement | 82 | Schenkel |
| 38 | Steckelement | | |
| 40 | Steckelement | | |
| 42 | Steckelement | | |
| 44 | Einheit | | |
| 46 | Einheit | | |
| 48 | Anschlußplatte | | |
| 50 | Anschlußplatte | | |
| 52 | Kunststoff | | |
| 54 | Spule | | |

## Patentansprüche

1. Vorrichtung mit zumindest einem Entstörglied (10, 12) zur Reduzierung einer Störleistung, insbesondere im hochfrequenten Bereich einer elektrischen Maschine (18), und mit zumindest einem Anschlußelement (14, 16) zum Anschluß an einen Polschuh der elektrischen Maschine (18), das ein Steckelement (24, 26) zum Anschluß an den Polschuh und ein Steckelement (36, 38) zum Anschluß an einen Anker, das an das Anschlußelement (14, 16) angeformt ist, aufweist, **dadurch gekennzeichnet, daß** das Entstörglied (10, 12) in einem Aufnahmebereich (20, 22) des Anschlußelements (14, 16), das das Steckelement (24, 26) zum Anschluß an den Polschuh aufweist, befestigt und mit diesem zu einem Modul (28, 30, 32, 34) zusammengefaßt und bezüglich eines Stromverlaufs zwischen einem Anker und dem Polschuh der elektrischen Maschine (18) angeordnet ist.

2. Vorrichtung nach Anspruch 1, **dadurch gekennzeichnet, daß** ein Steckelement (40, 42) zum Anschluß an einen Betätigungsschalter mit in das Modul (32, 34) integriert ist.

3. Vorrichtung nach einem der vorhergehenden Ansprüche, **dadurch gekennzeichnet, daß** zwei baugleiche Module (28, 30, 32, 34) vorgesehen sind.

4. Vorrichtung nach einem der vorhergehenden Ansprüche, **dadurch gekennzeichnet, daß** zwei Module (28, 30, 32, 34) auf einer Trägereinheit (48, 50) zu einer einsetzbaren Einheit (44, 46) zusammengefaßt sind.

5. Vorrichtung nach einem der vorhergehenden Ansprüche, **dadurch gekennzeichnet, daß** das Modul (28, 30, 32, 34) auf einer Anschlußplatte (48, 50) der elektrischen Maschine (18) angeordnet ist.

6. Vorrichtung nach einem der vorhergehenden Ansprüche, **dadurch gekennzeichnet, daß** das Modul (28, 30, 32, 34) zumindest teilweise mit Kunststoff (52) umspritzt ist.

7. Vorrichtung nach Anspruch 4 oder 5 und 6, **dadurch gekennzeichnet, daß** das Modul zumindest teilweise von der Anschlußplatte umspritzt ist.

8. Handwerkzeugmaschine mit einer Vorrichtung nach einem der vorhergehenden Ansprüche.

## Claims

1. Apparatus having at least one interference-suppression element (10, 12) for reducing interference, in particular in the high-frequency range of an electrical machine (18), and having at least one connection element (14, 16) for connection to a pole shoe of the electrical machine (18), which connection element has a plug element (24, 26) for connection to the pole shoe and has a plug element (36, 38) for connection to an armature, which plug element is integrally formed on the connection element (14, 16), **characterized in that** the interference-suppression element (10, 12) is mounted in a receiving region (20, 22) of the connection element (14, 16), which has the plug element (24, 26) for connection to the pole shoe, and is combined with the said connection element in order to form a module (28, 30, 32, 34), and is arranged between an armature and the pole shoe of the electrical machine (18) in respect of a current profile.

2. Apparatus according to Claim 1, **characterized in that** a plug element (40, 42) for connection to an operating switch is also integrated into the module (32, 34).

3. Apparatus according to either of the preceding claims, **characterized in that** two modules (28, 30, 32, 34) of identical construction are provided.

4. Apparatus according to one of the preceding claims, **characterized in that** two modules (28, 30, 32, 34) are combined on a carrier unit (48, 50) to form a unit (44, 46) which can be inserted.

5. Apparatus according to one of the preceding claims, **characterized in that** the module (28, 30, 32, 34) is arranged on a connection plate (48, 50) of the electrical machine (18).

6. Apparatus according to one of the preceding claims, **characterized in that** the module (28, 30, 32, 34) is at least partially encapsulated by injection-moulding with plastic (52).

7. Apparatus according to Claim 4 or 5 and 6, **characterized in that** the module is at least partially encapsulated by injection-moulding by the connection plate.

8. Hand-held power tool having an apparatus according to one of the preceding claims.

## Revendications

1. Dispositif comprenant au moins un élément d'antiparasitage (10, 12) pour réduire une interférence, en particulier dans la plage haute fréquence d'une machine électrique (18), et comprenant au moins un élément de raccordement (14, 16) pour le raccordement à une pièce polaire de la machine électrique (18), qui présente un élément enfichable (24, 26) pour le raccordement à la pièce polaire et un élément enfichable (36, 38) pour le raccordement à un induit, lequel est façonné sur l'élément de raccordement (14, 16), **caractérisé en ce que** l'élément d'antiparasitage (10, 12) est fixé dans une région de réception (20, 22) de l'élément de raccordement (14, 16) qui présente l'élément enfichable (24, 26) pour le raccordement à la pièce polaire et est réuni à celui-ci pour former un module (28, 30, 32, 34) et est disposé par rapport à une circulation de courant entre un induit et la pièce polaire de la machine électrique (18).

2. Dispositif selon la revendication 1, **caractérisé en ce qu'**un élément enfichable (40, 42) est intégré dans le module (32, 34) en vue du raccordement à un commutateur de commande.

3. Dispositif selon l'une quelconque des revendications précédentes, **caractérisé en ce que** deux modules de même construction (28, 30, 32, 34) sont prévus.

4. Dispositif selon l'une quelconque des revendications précédentes, **caractérisé en ce que** deux modules (28, 30, 32, 34) sont réunis sur une unité de support (48, 50) pour former une unité pouvant être insérée (44, 46).

5. Dispositif selon l'une quelconque des revendications précédentes, **caractérisé en ce que** le module (28, 30, 32, 34) est disposé sur une plaque de raccordement (48, 50) de la machine électrique (18).

6. Dispositif selon l'une quelconque des revendications précédentes, **caractérisé en ce que** le module (28, 30, 32, 34) est au moins en partie surmoulé avec du plastique (52).

7. Dispositif selon les revendications 4 ou 5 et 6, **caractérisé en ce que** le module est surmoulé au moins en partie par la plaque de raccordement.

8. Machine-outil à main comprenant un dispositif selon l'une quelconque des revendications précédentes.
